# FASCICULE DE BREVET EUROPEEN

(11) **EP 0 926 279 B1**
(45) Date de publication et mention de la délivrance du brevet: **22.08.2001**
(21) Numéro de dépôt: 98420233.3
(22) Date de dépôt: 17.12.1998
(51) Int. Cl.: D03C 3/20, H02K 1/27, H02K 21/18, D03C 5/00

(54) **Actionneur rotatif électrique pour la formation de la foule sur un métier à tisser, mécanique d'armure et métier à tisser**
Elektrischer Drehaktuator für die Fachbildung in einer Webmaschine, Fachbildungsvorrichtung und Webmaschine
Rotary electrical actuator for the shedding mechanism on a loom, shedding mechanism and weaving loom

(30) Priorité: 24.12.1997 FR 9716734
(43) Date de publication de la demande: 30.06.1999
(73) Titulaire: STAUBLI FAVERGES, 74210 Faverges (FR)
(72) Inventeur: Braun, Dominique, 74210 Faverges (FR); Bourgeaux, Pierre, 74330 Poisy (FR); Iltis, Patrick, 74410 Saint Jorioz (FR)
(74) Mandataire: Myon, Gérard Jean-Pierre

(56) Documents cités:
- EP-A- 0 353 005
- EP-A- 0 447 257
- EP-A- 0 750 061
- WO-A-95/17035
- WO-A-97/33024
- US-A- 5 069 256
- US-A- 5 070 266
- PATENT ABSTRACTS OF JAPAN vol. 010, no. 376 (E-464), 13 décembre 1986 & JP 61 167360 A (MATSUSHITA ELECTRIC IND CO LTD), 29 juillet 1986
- PATENT ABSTRACTS OF JAPAN vol. 010, no. 150 (E-408), 31 mai 1986 & JP 61 010952 A (HITACHI SEISAKUSHO KK), 18 janvier 1986
- PATENT ABSTRACTS OF JAPAN vol. 098, no. 002, 30 janvier 1998 & JP 09 268450 A (TOYOTA AUTOM LOOM WORKS LTD), 14 octobre 1997

## Description

L'invention a trait à un actionneur électrique pour la formation de la foule sur un métier à tisser, notamment pour la commande des arcades d'une mécanique d'armure de type Jacquard ou des cadres d'une ratière. L'invention a également trait à une mécanique d'armure comprenant un tel actionneur et à un métier à tisser équipé d'une telle mécanique.

Dans les mécaniques d'armure du type Jacquard, il est connu d'entraîner, en opposition de phase, deux cadres portant chacun une multiplicité de griffes ou couteaux horizontaux aptes à déplacer verticalement des crochets reliés aux arcades par un mécanisme à poulies ou à moufle. Des dispositifs mécaniques ou électromécaniques sont prévus pour immobiliser ces crochets le long de leur course verticale. Ce genre de dispositif connu nécessite une puissance importante pour la manoeuvre des cadres de griffes, cette puissance étant fournie par l'arbre moteur du métier à tisser, ce qui induit un surdimensionnement de ce métier.

Il est également connu, voir par exemple EP 353 005 A, d'utiliser un moteur rotatif tel qu'un moteur pas à pas ou un servomoteur pour commander linéairement une cordelette appartenant à un métier à tisser. Compte tenu du grand nombre de moteurs électriques utilisés dans la mécanique d'armure associée à un métier à tisser, nombre qui peut atteindre, voire dépasser, 10 000, ces moteurs doivent être d'un encombrement et d'un prix de revient les plus faibles possible, tout en présentant une grande fiabilité. En particulier, un tel moteur électrique rotatif doit pouvoir s'immobiliser et redémarrer dans n'importe qu'elle position correspondant à la course normale de l'arcade afin d'être compatible avec les différents types de foule, droite ou oblique, recherchés par l'utilisateur. En outre, afin d'éviter une consommation de courant trop importante, ces moteurs doivent présenter une faible inertie car ils sont sujets à des démarrages, arrêts et inversions de course fréquents et rapides.

Le but de la présente invention est de proposer un actionneur rotatif électrique apte à commander le déplacement d'une ou plusieurs arcades, compact, susceptible d'entrer en rotation quelle que soit sa position d'arrêt et présentant un prix de revient et une inertie aussi bas que possible.

Dans cet esprit, l'invention concerne un actionneur rotatif électrique pour la formation de la foule sur un métier à tisser, notamment pour la commande des arcades d'une mécanique d'armure de type Jacquard, comprenant un rotor et un stator, caractérisé en ce que le stator est formé d'au moins deux éléments statoriques décalés selon l'axe de rotation du rotor et en ce que le rotor est formé d'un tube contenant au moins deux aimants permanents, polarisés diamétralement et décalés axialement dans le tube, chaque aimant étant disposé dans l'entrefer d'un élément statorique.

L'actionneur rotatif électrique suivant l'invention est compact et aisé à fabriquer dans la mesure où le rotor peut être essentiellement formé d'un tube et d'aimants de forme globalement cylindrique qui sont des pièces simples. En outre, la structure du rotor formé d'un tube et de deux aimants implique une faible inertie car le diamètre du rotor peut être réduit, par exemple inférieur à 5 mm.

Selon un premier mode de réalisation de l'invention, les éléments statoriques sont globalement alignés et les polarités des aimants permanents sont décalées angulairement. Le fait que les polarités des aimants permanents sont décalées permet que, quelle que soit la position du rotor, l'un au moins des aimants est dans une position telle que l'activation des stators correspondants induit sur l'aimant, et donc sur le rotor, une force électromagnétique non parallèle à la direction de polarisation de l'élément et une mise en rotation du rotor. En d'autres termes, les deux aimants dont les polarités sont décalées angulairement ne peuvent pas se trouver simultanément dans une position dans laquelle le champ électromagnétique généré par les éléments statoriques, qui sont alignés, n'aurait pas d'influence mécanique sur le rotor.

Selon un aspect avantageux de l'invention, correspondant à un premier mode de réalisation préférentiel, les aimants permanents ont des polarités décalées d'environ 60 à environ 120°, de préférence 90°, dans le cas d'un actionneur biphasé ou d'environ 90 à environ 150°, de préférence 120°, dans le cas d'un actionneur triphasé. Cette configuration géométrique garantit que, dans le cas d'un actionneur biphasé avec des polarités d'aimants décalées de 90°, l'un au moins des aimants est orienté avec un angle supérieur ou égal à 45° par rapport à la direction des forces électromagnétiques générées dans l'entrefer des stators. Dans le cas d'un actionneur triphasé, deux au moins des aimants sont orientés avec un angle supérieur ou égal à 30° par rapport à cette direction.

Selon un second mode de réalisation de l'invention, on peut prévoir, par une inversion de structure par rapport au premier mode de réalisation de l'invention, que les aimants permanents ont des polarités globalement alignées, alors que les éléments statoriques sont décalés angulairement. On obtient alors un effet analogue à celui obtenu avec le premier mode de réalisation, c'est-à-dire le fait que l'activation des stators résulte dans la mise en rotation du rotor quelle que soit la position d'arrêt de celui-ci.

Selon un aspect avantageux de l'invention correspondant à un mode de réalisation préférentiel, les éléments statoriques sont alors décalés angulairement d'environ 60 à environ 120°, de préférence 90° dans le cas d'un actionneur biphasé, ou d'environ 90 à environ 150°, de préférence 120° dans le cas d'un actionneur triphasé.

Selon un autre aspect avantageux de l'invention, l'actionneur comprend des moyens d'écartement axial des'aimants à l'intérieur du tube du rotor. Ces moyens d'écartement axial garantissent un positionnement adéquat des aimants permanents par rapport aux entrefers des stators correspondants.

Selon un autre aspect avantageux de l'invention, le rotor porte un organe apte à coopérer avec un dispositif de freinage et/ou un dispositif de détection de position angulaire. Cet aspect de l'invention permet de commander avec précision l'actionneur suivant l'invention, en particulier grâce à un frein de sécurité permettant le maintien de l'actionneur dans une position déterminée lorsqu'il n'est pas activé, et/ou à un codeur de position.

Selon un autre aspect avantageux de l'invention les aimants et/ou l'organe apte à coopérer avec un dispositif de freinage sont immobilisés en rotation par rapport au tube, par exemple collés ou emmanchés à force dans celui-ci. Ceci garantit une transmission efficace au tube du couple exercé par les stators sur les rotors et un positionnement adéquat des différents constituants du circuit magnétique, et/ou un freinage efficace.

De façon particulièrement simple du point de vue de la réalisation, les aimants sont sensiblement cylindriques. On peut en outre prévoir qu'au moins un palier de support du rotor est formé par un roulement à billes.

L'invention concerne également une mécanique d'armure qui comprend un ou des actionneur(s) tel(s) que précédemment décrit(s) et un métier à tisser équipé d'une telle mécanique. Cette mécanique est plus simple à mettre en oeuvre et à entretenir que les dispositifs de l'art antérieur et permet une commande fil à fil d'un harnais de métier Jacquard. Le rendement d'un métier à tisser conforme à l'invention est donc sensiblement amélioré par rapport à la technique connue.

L'invention sera mieux comprise et d'autres avantages de celle-ci apparaîtront plus clairement à la lumière de la description qui va suivre d'un mode de réalisation d'un actionneur rotatif électrique conforme à son principe, donnée uniquement à titre d'exemple et faite en référence aux dessins annexés dans lesquels :
- La figure 1 est une coupe longitudinale d'un actionneur conforme à l'invention ;
- La figure 2 est une coupe transversale selon la ligne II-II à la figure 1 ;
- La figure 3 est une vue à plus grande échelle du détail III à la figure 2 ;
- La figure 4 est une coupe analogue à la figure 3 dans le plan de la ligne IV-IV à la figure 1 et
- La figure 5 illustre un exemple de mise en place de l'actionneur de la figure 1.

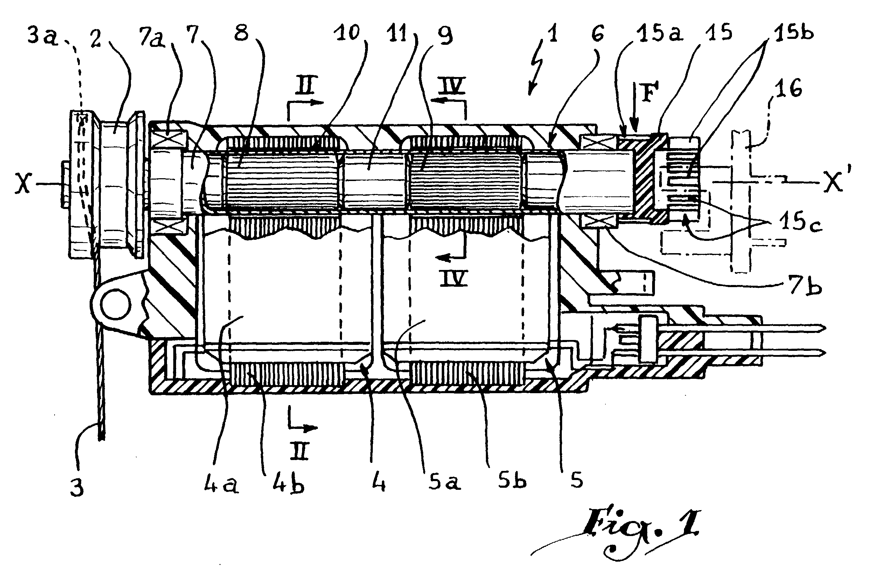

L'actionneur rotatif électrique 1, représenté à la figure 1, est destiné à assurer l'enroulement, sur une poulie 2, d'une arcade 3 reliée à un ou plusieurs fils de chaîne d'une mécanique d'armure de type Jacquard. L'actionneur 1 est un actionneur biphasé. Il comprend un stator formé de deux éléments statoriques 4 et 5 décalés dans une direction matérialisée par un axe XX'. Ces éléments 4 et 5 sont globalement alignés et aptes à coopérer avec un rotor 6 formé d'un tube 7 centré sur l'axe XX'. Le tube 7 est réalisé, de préférence, en matériau amagnétique, tel que par exemple du laiton. Le tube 7 est supporté dans le corps de l'actionneur 1 par deux paliers 7a et 7b formés par des roulements à billes. L'utilisation de roulements à billes permet un excellent rendement en rotation. Le tube 7 contient deux aimants permanents 8 et 9, de forme sensiblement cylindrique, décalés selon l'axe XX' et disposés en vis-à-vis des deux éléments statoriques 4 et 5. Ces éléments 4 et 5 comprennent des bobinages 4a et 5a de fil électriquement conducteur, tel que du fil de cuivre, enroulés autour d'empilages 4b et 5b de tôles magnétiquement conductrices. La forme des empilages 4b et 5b est telle qu'ils forment un logement circulaire 10 pour la réception du tube 7. La taille du logement 10 définit l'entrefer des éléments statoriques 4 et 5 par rapport au rotor 6.

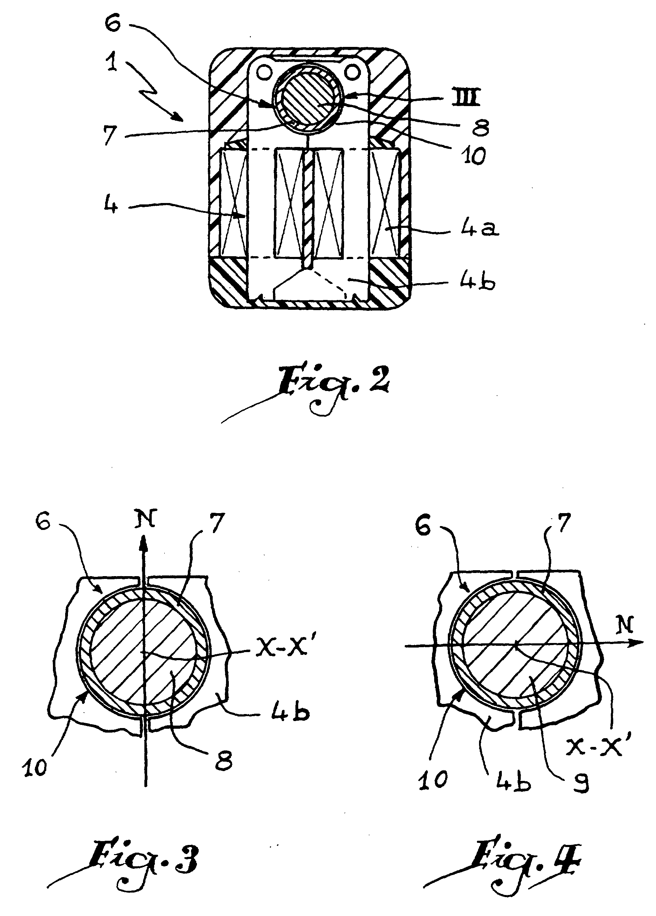

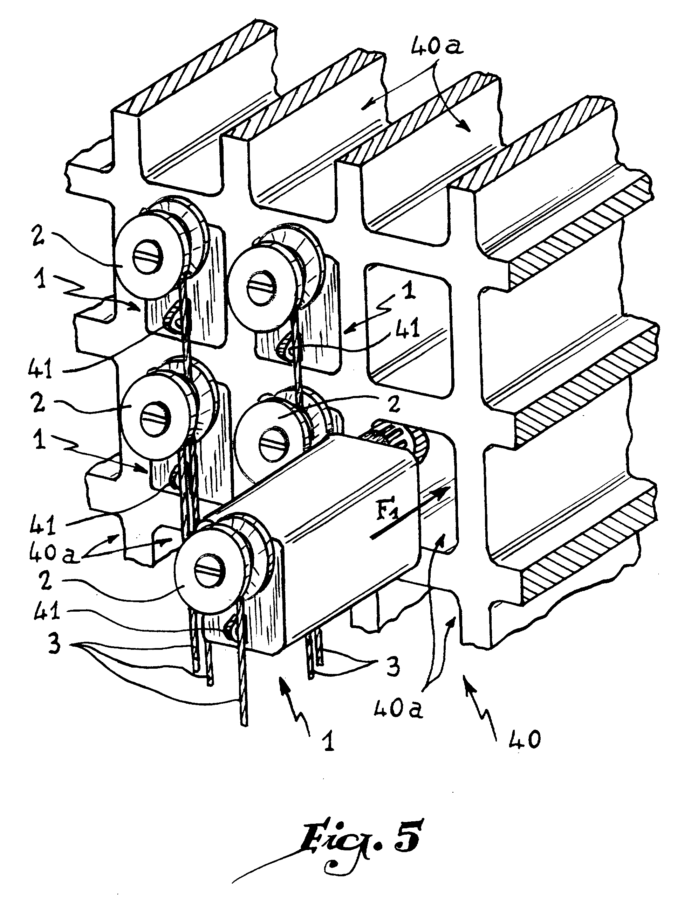

Comme il apparaît plus clairement aux figures 3 et 4, les aimants 8 et 9 ont des polarités décalées angulairement d'environ 90°. Ainsi, l'un au moins des aimants 8 ou 9 est en permanence dans une orientation telle que la force électromagnétique créée dans le logement 10 est de nature à exercer un couple sur le rotor 6, car l'un au moins des aimants 8 ou 9 n'a pas sa ligne Nord-Sud parallèle à cette force.

L'actionneur rotatif suivant l'invention peut fonctionner efficacement dès lors que les deux aimants 8 et 9 ont des polarités orientées différemment, la valeur de l'angle de décalage pouvant en principe être comprise entre 0 et 180°. En pratique, elle est comprise entre 60 et 120°. Cependant, la valeur de 90° présente l'avantage supplémentaire qu'elle permet d'obtenir le meilleur rendement électromagnétique et un démarrage optimisé quelle que soit la position d'arrêt de l'actionneur.

Un écarteur 11 est disposé à l'intérieur du tube 7 entre les aimants 8 et 9 qui sont immobilisés en rotation par rapport au tube 7, par exemple, collés ou emmanchés à force dans le tube. Cet écarteur est inséré dans le tube 7 en cours de fabrication du rotor 6, de façon à caler axialement les aimants 8 et 9. D'autres moyens d'écartement axial des aimants 8 et 9 à l'intérieur du tube 7 peuvent cependant être envisagés, comme, par exemple, une paire de collerettes internes obtenues par moulage, usinage ou retreint à l'intérieur du tube 7, des rondelles élastiques immobilisées par dilatation à l'intérieur du tube ou des picots dirigés vers l'intérieur du tube.

Le tube 7 porte, à l'extrémité opposée à la poulie 2, une coupelle 15 munie d'au moins une encoche 15a sur sa surface radiale externe. La coupelle 15 peut être collée, ou emmanchée à force sur le tube 7. Une force de coincement ou de freinage F peut être appliquée sur la coupelle 15 de manière sensiblement perpendiculaire à l'axe de rotation X-X' du rotor 6. Cette force F peut être appliquée par tout moyen adapté, alors que l'encoche 15a permet un blocage de la coupelle 15 et du tube 7 en position. Par ailleurs, la coupelle 15 est découpée de dents 15b s'étendant parallèlement à l'axe X-X' et définissant entre elles des fentes 15c. La succession des dents 15b et des fentes 15c permet à un détecteur 16, du type optique, infra-rouge ou équivalent, de repérer l'orientation de la coupelle 15 et du rotor 6 autour de l'axe X-X'. Le détecteur 16 est relié à une unité logique de contrôle de l'alimentation des bobinages 4a et 5a, de sorte que le détecteur-codeur 16 permet un contrôle de la rotation du rotor 6 autour de l'axe X-X'.

L'actionneur réalisé grâce à l'invention est d'un prix de revient très satisfaisant et présente une faible inertie. Il peut donc être monté en grand nombre sur une mécanique de type Jacquard pour la formation de la foule sur métier à tisser.

L'actionneur suivant l'invention peut avantageusement être installé en batterie, comme cela apparaît à la figure 5, c'est-à-dire en disposant un grand nombre d'actionneurs côte à côte à l'intérieur d'une structure 40 définissant des compartiments ou cases 40a de réception des actionneurs. Les actionneurs sont insérés dans les compartiments 40a selon une direction F₁ et peuvent en être extraits grâce à une patte percée 41 prévue sur leur face avant.

Les différents codeurs 16 et le système de freinage correspondant peuvent être prévus sur l'arrière de la structure 40.

L'utilisation de roulements à billes permet un guidage précis du tube 7, ce qui garantit la constance et la précision de l'entrefer entre les stators 4 et 5 et les aimants 8 et 9. L'assemblage réalisé grâce aux roulements 7a et 7b est rigide, de sorte que le positionnement de la poulie est conservé, même en cas de traction intense sur l'arcade 3, alors que la coupelle 15 est toujours positionnée correctement par rapport au détecteur 16.

Dans le cas d'un actionneur triphasé, trois stators sont prévus alignés et le tube formant le rotor renferme trois aimants permanents. Les polarités de ces aimants peuvent être prévues décalées angulairement d'environ 120°. Il serait également possible de prévoir un actionneur avec plus de trois stators, le nombre d'aimants du rotor étant alors adapté. Enfin, des rotors décalés angulairement peuvent être prévus, les polarités des aimants étant alors globalement alignées.

Bien que décrite essentiellement en référence à un actionneur pour mécanique Jacquard, l'invention est également applicable aux machines textiles en général et, en particulier, aux métiers à tisser équipés d'une ratière ou aux machines de bonneterie pour la commande des aiguilles.

## Revendications

1. Actionneur rotatif électrique (1) pour la formation de la foule sur un métier à tisser, notamment pour la commande des arcades (3) d'une mécanique d'armure du type Jacquard ou des cadres d'une ratière, comprenant un rotor (6) et un stator, caractérisé en ce que ledit stator est formé d'au moins deux éléments statoriques (4, 5) décalés selon l'axe de rotation (XX') dudit rotor et en ce que ledit rotor est formé d'un tube (7) contenant au moins deux aimants permanents (8, 9), polarisés diamétralement et décalés axialement dans ledit tube, chaque aimant étant disposé dans l'entrefer (10) d'un élément statorique.

2. Actionneur rotatif selon la revendication 1, caractérisé en ce que lesdits éléments statoriques (4, 5) sont globalement alignés et en ce que les polarités desdits aimants permanents (8, 9) sont décalées angulairement.

3. Actionneur rotatif selon la revendication 2, caractérisé en ce que lesdits aimants permanents (8, 9) ont des polarités décalées d'environ 60° à environ 120°, de préférence 90°, dans le cas d'un actionneur biphasé ou d'environ 90 à environ 150°, de préférence d'environ 120°, dans le cas d'un actionneur triphasé.

4. Actionneur rotatif selon la revendication 1, caractérisé en ce que lesdits aimants permanents ont des polarités globalement alignées et en ce que ledits éléments statoriques sont décalés angulairement.

5. Actionneur rotatif selon la revendication 4, caractérisé en ce que lesdits éléments statoriques sont décalés angulairement d'environ 60 à environ 120°, de préférence 90°, dans le cas d'un actionneur biphasé ou d'environ 90 à environ 150°, de préférence 120° dans le cas d'un actionneur triphasé.

6. Actionneur rotatif selon l'une des revendications précédentes, caractérisé en ce qu'il comprend des moyens (11) d'écartement axial desdits aimants (8, 9) à l'intérieur dudit tube (7).

7. Actionneur rotatif selon l'une des revendications précédentes, caractérisé en ce que ledit rotor (6) porte un organe (15) apte à coopérer avec un dispositif de freinage (F) et/ou un dispositif de détection (16) de position angulaire.

8. Actionneur rotatif selon l'une des revendications précédentes, caractérisé en ce que lesdits aimants (8, 9) et/ou ledit organe (15) sont immobilisés en rotation par rapport audit tube (7), notamment collés ou emmanchés à force dans ledit tube.

9. Actionneur rotatif selon l'une des revendications précédentes, caractérisé en ce que lesdits aimants (8, 9) sont sensiblement cylindriques.

10. Actionneur rotatif selon l'une des revendications précédentes, caractérisé en ce que ledit rotor est supporté par au moins un palier (7a, 7b) formé par un roulement à billes.

11. Mécanique d'armure de métier à tisser, caractérisée en ce qu'elle comprend au moins un actionneur conforme à l'une au moins des revendications précédentes.

12. Métier à tisser, caractérisé en ce qu'il comprend une mécanique d'armure selon la revendication 11.

## Patentansprüche

1. Rotierendes elektrisches Betätigungselement (1) für die Fachbildung an einem Webstuhl, insbesondere für die Steuerung von Harnischkordeln (3) einer Schaftmaschine des Jacquard Typs oder von Maschinenauflagegestellen, mit einem Rotor (6) und einem Stator, dadurch gekennzeichnet, daß der Stator aus mindestens zwei Statorelementen (4, 5) gebildet ist, die entsprechend der Drehachse (XX') des Rotors versetzt ist und daß der Rotor aus einem Rohr (7) gebildet wird, das mindestens zwei Dauermagnete (8, 9) enthält, die diametral polarisiert und axial in dem Rohr versetzt sind, wobei jeder Magnet im Luftspalt (10) eines Statorelementes angeordnet ist.

2. Rotierendes Betätigungselement nach Anspruch 1, dadurch gekennzeichnet, daß die Statorelemente (4, 5) im ganzen gesehen fluchten und daß die Polaritäten der Dauermagnete (8, 9) winkelmäßig versetzt sind.

3. Rotierendes Betätigungselement nach Anspruch 2, dadurch gekennzeichnet, daß die Dauermagnete (8, 9) versetzte Polaritäten von etwa 60° bis etwa 120°, vorzugsweise 90°, im Fall eines zweiphasigen Betätigungselementes oder etwa 90° bis etwa 150°, vorzugsweise 120° im Fall eines dreiphasigen Betätigungselementes aufweisen.

4. Rotierendes Betätigungselement nach Anspruch 1, dadurch gekennzeichnet, daß die Dauermagnete im ganzen gesehen fluchtende Polaritäten aufweisen und daß die Statorelemente winkelmäßig versetzt sind.

5. Rotierendes Betätigungselement nach Anspruch 4, dadurch gekennzeichnet, daß die Statorelemente winkelmäßig um etwa 60 bis etwa 120°, vorzugsweise 90°, im Fall eines zweiphasigen Betätigungselementes und um etwa 90 bis etwa 150°, vorzugsweise 120° im Fall eines dreiphasigen Betätigungselementes versetzt sind.

6. Rotierendes Betätigungselement nach einem der vorhergehenden Ansprüche, dadurch gekennzeichnet, daß es Mittel (11) zum axialen Beabstanden der Magnete (8, 9) im Inneren des Rohres (7) umfaßt.

7. Rotierendes Betätigungselement nach einem der vorhergehenden Ansprüche, dadurch gekennzeichnet, daß der Rotor (6) ein Organ (15) trägt, das mit einer Bremsvorrichtung (F) und/oder einer Abtastvorrichtung (16) der Winkelposition zusammenarbeitet.

8. Rotierendes Betätigungselement nach einem der vorhergehenden Ansprüche, dadurch gekennzeichnet, daß die Magnete (8, 9) und/oder das Organ (15) gegen Drehung in Bezug auf das Rohr (7) festgelegt sind, insbesondere festgeklebt oder eingepreßt sind.

9. Rotierendes Betätigungselement nach einem der vorhergehenden Ansprüche, dadurch gekennzeichnet, daß die Magnete (8, 9) im Wesentlichen zylindrisch sind.

10. Rotierendes Betätigungselement nach einem der vorhergehenden Ansprüche, dadurch gekennzeichnet, daß der Rotor durch mindestens ein Lager (7a, 7b) gelagert ist, das durch ein Kugellager gebildet wird.

11. Schaftmaschine eines Webstuhls, dadurch gekennzeichnet, daß sie mindestens ein Betätigungselement entsprechend mindestens einem der vorhergehenden Ansprüche umfaßt.

12. Webstuhl, dadurch gekennzeichnet, daß er eine Schaftmaschine nach Anspruch 11 umfaßt.

## Claims

1. Rotary electrical actuator (1) for a shedding mechanism on a weaving loom, particularly for controlling the harness cords (3) of a Jacquard-type dobby mechanism or the frames of a dobby, comprising a rotor (6) and a stator, characterised in that the said stator is composed of at least two stator elements (4, 5) shifted according to the axis of rotation (XX') of the said rotor, and in that the said rotor is composed of a tube (7) containing at least two permanent magnets (8, 9) which are diametrically polarised and axially shifted in the said tube, each magnet being disposed within the air gap (10) of a stator element.

2. Rotary actuator according to claim 1, characterised in that the said stator elements (4, 5) are globally aligned, and in that the polarities of the said permanent magnets (8, 9) are angularly shifted.

3. Rotary actuator according to claim 2, characterised in that the said permanent magnets (8, 9) have polarities which are shifted by about 60° to about 120°, preferably 90°, in the case of a two-phase actuator, or by about 90 to about 150°, preferably by about 120°, in the case of a three-phase actuator.

4. Rotary actuator according to claim 1, characterised in that the said permanent magnets have globally aligned polarities, and in that the said stator elements are angularly shifted.

5. Rotary actuator according to claim 4, characterised in that the said stator elements are angularly shifted by about 60 to about 120°, preferably 90°, in the case of a two-phase actuator, or by about 90 to about 150°, preferably 120°, in the case of a three-phase actuator.

6. Rotary actuator according to any one of the preceding claims, characterised in that it comprises means (11) of axial separation of the said magnets (8, 9) inside the said tube (7).

7. Rotary actuator according to any one of the preceding claims, characterised in that the said rotor (6) bears an organ (15) suitable for co-operating with a braking device (F) and/or a device (16) for detecting angular position.

8. Rotary actuator according to any one of the preceding claims, characterised in that the said magnets (8, 9) and/or the said organ (15) are immobilised in rotation with respect to the said tube (7), particularly glued or force-fitted in the said tube.

9. Rotary actuator according to any one of the preceding claims, characterised in that the said magnets (8, 9) are substantially cylindrical.

10. Rotary actuator according to any one of the preceding claims, characterised in that the said rotor is supported by at least one bearing (7a, 7b) formed by a ball bearing.

11. Dobby mechanism of a loom, characterised in that it comprises at least one actuator conforming to at least one of the preceding claims.

12. Weaving loom, characterised in that it comprises a dobby mechanism according to claim 11.
